# FASCICULE DE BREVET EUROPEEN

(11) **EP 1 815 576 B1**
(45) Date de publication et mention de la délivrance du brevet: **03.12.2014**
(21) Numéro de dépôt: 05814990.7
(22) Date de dépôt: 26.10.2005
(51) Int. Cl.: H02J 7/00

(54) **CHARGEUR ELECTRIQUE AUTONOME**
AUTONOMES ELEKTRISCHES LADEGERÄT
SELF-POWERED ELECTRIC CHARGER

(30) Priorité: 15.11.2004 FR 0412088
(43) Date de publication de la demande: 08.08.2007
(73) Titulaire: Orange, 75015 Paris (FR)
(72) Inventeur: MARQUET, Didier, F-92240 Malakoff (FR); VERNET, Michel, 38240 MEYLAN (FR)
(74) Mandataire: Cabinet Plasseraud
(86) Numéro de dépôt international: PCT/FR2005/002684
(87) Numéro de publication internationale: WO 2006/051178

(56) Documents cités:
- US-A- 6 100 665
- US-A1- 2003 231 001
- US-A1- 2004 207 362
- US-A1- 2004 219 399

## Description

La présente invention se rapporte à un dispositif de chargement électrique d'appareils rechargeables. Plus particulièrement, l'invention concerne un chargeur de batteries ayant une source principale d'énergie qui comprend au moins un générateur électrique et destiné à des équipements portables, ou mobiles.

Les progrès actuels concernant les piles à combustible, alimentées par une réserve de combustible, par exemple sous la forme de méthanol liquide ou bien d'hydrogène gazeux, permettent d'envisager des systèmes pouvant alimenter par exemple des terminaux portables.

Un chargeur autonome fonctionnant à piles électriques est connu pour recharger des téléphones mobiles. Le dispositif comprend une plie et ne nécessite donc pas de raccordement à une prise secteur. Il est muni d'une sortie et des moyens de connexion nécessaires afin de délivrer à la batterie du téléphone l'énergie requise pour son rechargement.

Cependant, les piles à haute densité d'énergie ne peuvent délivrer une puissance moyenne élevée en comparaison avec la puissance moyenne délivrée par un chargeur secteur rapide de coût, de volume et de masse équivalents. De plus, les tensions des piles étant généralement peu élevées et souvent insuffisantes pour être utilisées seules, il est nécessaire de les mettre en série ou d'élever électroniquement leur tension afin d'obtenir une tension suffisante. Mais l'intensité utilisable, déjà faible en moyenne pour une pile, est en plus limitée par la pile la plus faible de la série, ou par les pertes de l'électronique, ce qui réduit encore la densité de puissance disponible de l'ensemble. De plus, le temps de démarrage des piles incluant leur montée en température peut être assez long et les conditions de fonctionnement sont moins bien maîtrisées que celles des batteries. Le chargement d'une batterie à l'aide d'un tel dispositif est donc très lent, en particulier dans le cas de piles à combustibles.

Un but de la présente invention est de remédier à ces inconvénients en proposant un chargeur électrique, ayant une source primaire d'énergie qui permette une charge rapide d'appareils rechargeables.

Des exemples de dispositifs selon l'art antérieur sont divulgués dans les documents référencés US 2003/231001 et US 2004/219399.

Un autre but de la présente invention est de fournir un chargeur électrique dont la fiabilité et la durée de vie est avantageusement augmentée.

L'invention propose donc un chargeur électrique comprenant un module de stockage d'énergie électrique ayant une interface adaptée pour un raccordement à une batterie externe à recharger, un générateur électrique alimenté en ressources énergétiques de manière commandable, pour fournir de l'énergie électrique au module de stockage, selon un point de fonctionnement choisi, et des moyens de commande du générateur agencés pour adapter le point de fonctionnement dudit générateur lorsqu'il fournit de l'énergie électrique au module de stockage, en fonction d'informations sur l'état du module de stockage et d'informations sur l'état du générateur, lesdites informations sur l'état du module de stockage comprenant la charge restante dans le module de stockage, la température du module de stockage ou la pression dans le module de stockage, et lesdites informations sur l'état du générateur comprenant la température du générateur ou la quantité d'énergie encore disponible dans le générateur.

Le générateur électrique charge lentement le module de stockage électrique. Le module de stockage électrique admet en revanche une décharge rapide, fournissant ainsi à la batterie de l'appareil raccordé à la sortie la puissance nécessaire à une charge rapide. Puis, lorsque aucun appareil à recharger n'est raccordé, ou bien lorsque le niveau de charge du module de stockage électrique passe sous un seuil prédéterminé, les moyens de commande remettent en service le générateur. Le point de fonctionnement du générateur, défini par sa tension de sortie et par l'intensité de son courant de sortie, est adapté en fonction de l'état du module de stockage et de l'état du générateur. Ainsi, le courant et la tension d'entrée du module de stockage sont commandés de manière à diminuer les pertes lors de la charge du module de stockage d'énergie, mais aussi à éviter des dommages de ce module par exemple lors d'une surcharge. On fournit par exemple des informations sur la charge restante dans le module de stockage d'énergie, sur sa température ou sa pression. De même, ce point de fonctionnement peut également être commandé afin d'obtenir le rendement maximal du générateur électrique. Les informations sur le point de fonctionnement du générateur fournies aux moyens de commande peuvent également comprendre sa température, ou sur la quantité d'énergie encore disponible.

Ainsi, le rendement du générateur électrique peut être amélioré puisque son fonctionnement peut être adapté pour obtenir un point de fonctionnement optimal. De plus, on peut éviter une usure ou une détérioration de module de stockage d'énergie électrique.

Le générateur électrique peut être par exemple un générateur thermo électrique ou thermodynamique, une pile électrochimique telle une pile à combustible.

Le module de stockage d'énergie électrique peut être un assemblage d'éléments de stockage électrique, comme par exemple une batterie ou une super-capacité (SuperCAP), ou encore une combinaison de batteries et de super-capa cités.

Dans divers modes de réalisation de l'invention, on peut éventuellement avoir recours en outre à l'une et/ou l'autre des dispositions suivantes :
- le générateur est un générateur électrochimique ;
- les moyens de commande du générateur sont agencés pour contrôler une réaction chimique dans le générateur, en fonction d'informations sur l'état du module de stockage ;
- l'interface de raccordement du module de stockage comprend un circuit d'adaptation pour adapter des paramètres de sortie du module de stockage à des paramètres de charge de la batterie ;
- les informations sur l'état du module de stockage comprennent sa charge, sa température, sa pression, sa tension ou son intensité, en entrée ou en sortie ;
- le module de stockage comprend plusieurs éléments de stockage et des moyens de commutation pour connecter les éléments de stockage en parallèle durant la charge et en série durant la décharge ;
- le chargeur électrique comprend en outre des moyens pour charger le module de stockage depuis une source externe d'énergie ;
- la source externe comprend un câble de raccordement au secteur ou un câble USB ;
- au moins l'un parmi le générateur électrique, le module de stockage et la batterie externe comporte un dispositif d'identification adapté pour communiquer des données au circuit de commande, ledit circuit de commande étant configuré pour adapter sa commande sur la base desdites données ;
- le générateur électrochimique comprend une pile à combustible.

D'autres particularités et avantages de la présente invention apparaîtront dans la description ci-après d'exemples de réalisation non limitatifs, en référence aux dessins annexés, dans, lesquels :
- la figure 1 est un schéma synoptique d'un chargeur selon l'invention,
- la figure 2 représente un premier exemple de réalisation utilisant un ensemble de piles à combustible et des batteries NiMH,
- la figure 3 représente un exemple de réalisation mettant en oeuvre des piles Zinc-Air et des batteries NiMH agencées en parallèle lors de leur charge puis commutées en série lors de leur décharge,
- la figure 4 représente un exemple de réalisation mettant en oeuvre une pile Zinc-Air comprenant un élévateur de tension entre les piles et la batterie tampon.

Sur les différentes figures, on a conservé les mêmes références pour désigner les éléments identiques ou similaires

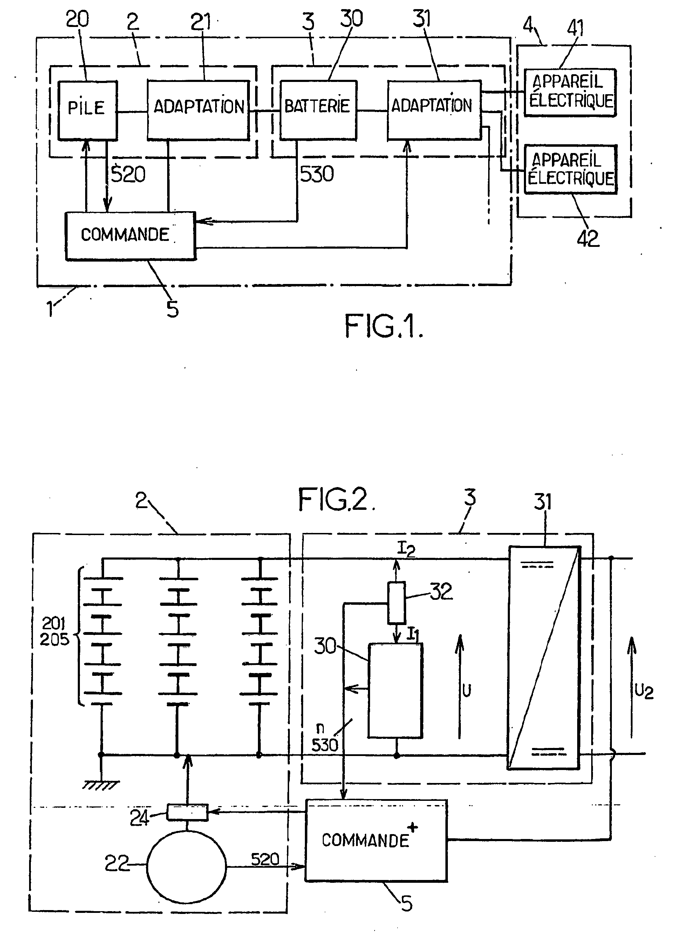

La figure 1 illustre un chargeur électrique 1 comprenant un générateur électrochimique 2 qui transfère sa puissance vers un module de stockage d'énergie électrique 3. Un ensemble d'appareils électriques 4, pouvant comprendre plusieurs appareils électriques 41, 42 etc, est raccordé à la sortie du chargeur 1.

Le générateur électrochimique 2 peut comporter par exemple une pile 20. Des moyens d'adaptation 21 permettent d'adapter le point de fonctionnement de la pile 20 aux paramètres d'entrée du module de stockage d'énergie électrique 3.

Le module de stockage d'énergie électrique 3 comporte un accumulateur qui consiste en une batterie 30 dans l'exemple représenté. Celle-ci possède une relativement faible densité d'énergie, mais une grande densité de puissance en comparaison avec la pile 20 du générateur électrochimique 2. Un circuit d'adaptation 31 permet d'adapter les paramètres de sortie de la batterie 30 aux paramètres d'entrée des appareils électriques 41, 42 etc...

Des informations 530 sur l'état de la batterie 30 et des informations 520 sur l'état de la pile 20 sont transmises à un circuit de commande 5 qui commande le fonctionnement de la pile 20 du générateur électrochimique 2 afin de charger la batterie 30. Le circuit de commande 5 contrôlé également le circuit d'adaptation 21 du générateur électrochimique 2 de manière à alimenter de façon correcte le module de stockage 3 tout en se plaçant au voisinage d'un point de fonctionnement optimal du générateur électrochimique 2. Le circuit de commande 5 pilote également le circuit d'adaptation 31 du circuit tampon 3 en fonction des informations 530 sur l'état de la batterie. Ces informations 520 et 530 comportent par exemple la pression, la température de la pile 20 et de la batterie 30, la tension à leurs bornes, l'intensité du courant de sortie de la pile 20 ou l'intensité du courant entrant dans le module de stockage d'énergie électrique, ou encore la charge de la batterie 30, la quantité d'énergie disponible dans la pile 20, ou tout au moins une estimation de ces paramètres.

Dans le mode de réalisation illustré par la figure 2, le générateur électrochimique 2 peut comporter la mise en série ou en parallèle de plusieurs éléments de pile, plus particulièrement des piles à combustible 201 à 205, et par exemple un réservoir de méthanol 22 alimentant en combustible les éléments de piles à combustible 201 à 205, via, une micropompe 24, l'apport d'oxygene étant réalisé grâce à une entrée d'air non représentée.

Le module de stockage d'énergie électrique 3 représenté à la figure 2 est constitué d'une batterie 30 au Nickel comme les batteries NiCd ou les NiMH, d'une résistance 32, en série avec la batterie et qui permet de mesurer le courant entrant I1 et sortant I2 de la batterie 30, et un circuit d'adaptation 31. Le circuit d'adaptation 31 délivre une tension continue de 5V en sortie du chargeur 1, la sortie étant connectée à un appareil dont la batterie est à recharger.

Un circuit de commande 5 pilote la micropompe 24 du réservoir 22 de la pile à combustible 20 en fonction de la tension mesurée aux bornes de la résistance 32, proportionnelle au courant I1 de la batterie 30, et de la tension aux bornes de la batterie 30.

Lorsque la batterie 30 est déchargée, la tension à ses bornes U est faible et elle ne peut pas délivrer une forte intensité. Ainsi, si la tension U est inférieure à 1,35V et si l'intensité du courant sortant I2 de la batterie est inférieure à 10mA, le circuit de commande 5 met en fonctionnement la micropompe 24 du réservoir de méthanol 22 de la pile à combustible 20 pour recharger la batterie 30. Lorsque la batterie est chargée, la tension à ses bornes U est grande mais elle n'admet en entrée qu'une intensité de courant de recharge faible. Par exemple, si la tension U est supérieure à 1,43V et si l'intensité du courant entrant I1 est inférieure à 25mA, le circuit de commande 5 arrête la micropompe 24, stoppant de même la production d'énergie par la pile à combustible 20.

Lors de la charge de la batterie 30, le circuit de commande 5 peut réguler la consommation de méthanol au moyen de la micropompe 24 afin d'atteindre un point de fonctionnement optimal de la plie à combustible 20. La micropompe 24 peut ainsi agir par exemple sur la pression et le débit de combustible. De manière analogue, le pilotage pourrait être effectué au moyen d'une régulation de l'entrée d'air de la pile 20 non représentée, ou encore sur le débit d'eau formée durant la réaction, en agissant sur les pompes ou les ventilateurs en entrée ou en sortie. Dans ce dernier cas, les informations 520 provenant de la pile 20 pourraient comprendre la masse de la plie à combustible ou la pression de sortie de vapeur d'eau.

Par point de fonctionnement optimal, on peut employer un point de fonctionnement de la pile à combustible où l'efficacité est maximale, ou encore un point de fonctionnement permettant la charge du module de stockage de la manière la plus rapide, ou la plus efficace. En effet, la quantité d'énergie comprise dans une batterie est fonction de l'intensité de charge. Plus cette intensité est faible, plus la quantité d'énergie que la batterie peut contenir est grande, mais plus le temps de charge est long.

Ce mode de réalisation présente l'avantage de fournir un chargeur fonctionnant avec des piles à combustible mais pouvant néanmoins procurer une charge rapide de la batterie de l'appareil raccordé en sortie. De plus, il fournit grâce à l'élévateur de tension 31 une tension U₂ suffisamment élevée pour recharger des batteries au Lithium, couramment utilisées dans les appareils portables.

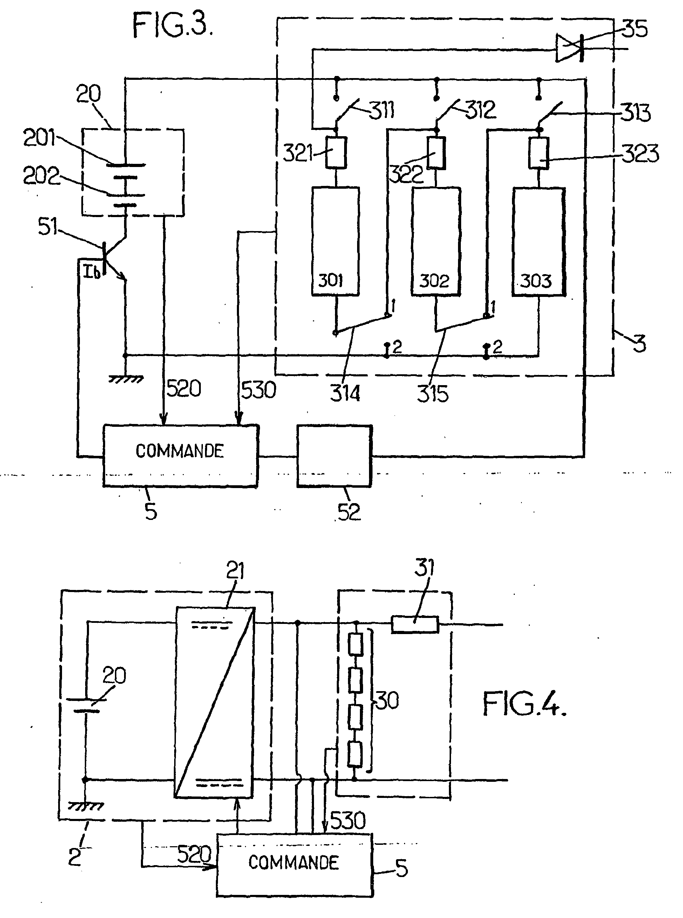

Un autre mode de réalisation, représenté à la figure 3, utilise une pile Zinc-Air 20 constituée de deux éléments de piles 201 et 202 mis en série. Le module de stockage comprend trois batteries 301, 302 et 303 au Nickel en série chacune avec une résistance 321, 322 et 323. Des interrupteurs 311, 312, 313, 314 et 315 sont disposés de manière à pouvoir connecter les batteries 301, 302 et 303 en série ou bien en parallèle. De plus, une diode 35 est connectée entre la sortie et les batteries 301, 302, 303, de manière à empêcher tout retour de courant dans les batteries 301, 302, 303.

Le circuit de commande 5, alimenté grâce à un circuit élévateur de tension 52, commande un transistor 51, tel un transistor bipolaire, afin de déconnecter la pile 20 lorsque les batteries 301, 302, 303 sont chargées.

Lors de la charge des batteries 301, 302, 303, les interrupteurs 311, 312, 313, 314, 315 sont commutés par exemple de telle sorte que les batteries 301, 302, 303 sont connectées en parallèle. Ainsi, la pile 20 transfère une faible intensité à chaque batterie 301, 302 et 303. La régulation en courant peut se faire au moyen du transistor 51, en jouant sur le courant de base I_{b} du transistor.

A l'inverse, lors de la décharge des batteries 301, 302, 303, les interrupteurs 311, 312, 313, 314, 315 sont commutés de telle sorte que les batteries 301, 302, 303 sont connectées en série. Ainsi, la tension en sortie est plus élevée lors de la décharge.

Ce mode de réalisation présente l'avantage d'obtenir une tension de sortie élevée sans nécessiter de circuit élévateur de tension en sortie.

La figure 4 illustre un quatrième mode de réalisation, dans lequel on utilise une pile Zinc-Air 20 comme générateur électrochimique. La tension en sortie de la pile est élevée par un circuit adaptateur de tension 21. A titre d'exemple, la tension de 0,9 à 1,2V en sortie de la pile est élevée à 5,7V par le circuit 21.

Le module de stockage d'énergie 3 est constitué par la mise en série de quatre batteries 30 et par une résistance 31, permettant de limiter le courant de sortie alimentant les appareils à recharger non représentés.

Un circuit de commande 5, alimenté par les batteries 30, contrôle la circuit d'adaptation de telle sorte que si la tension aux bornes des batteries 30 est inférieure à, par exemple, 5,4V, le circuit d'adaptation 21 laisse passer la puissance de la pile 20 vers les batteries 30. Inversement, si les batteries 30 sont chargées, la tension à leurs bornes est supérieure à 5,7 V et le circuit d'adaptation 21 stoppe le transfert de puissance de la pile 20 vers les batteries 30.

Selon un autre aspect de l'invention, le chargeur électrique comporte également une entrée, raccordable à une source externe comme un port USB, ou une tension secteur. Cette source externe est utilisée comme générateur secondaire, si par exemple le générateur électrochimique ne peut plus fournir d'énergie. La source externe est raccordée au module de stockage d'énergie électrique via un circuit d'adaptation, régulant la tension et limitant le courant et une diode anti-retour

Des jauges montrant l'état de stockage des batteries et du générateur électrique sont utilisées dans un mode de réalisation.

Selon un mode de réalisation, le circuit de commande du générateur et éventuellement du module de stockage d'énergie est électronique et comporte éventuellement un microcontrôleur ou un microprocesseur. Ainsi, il peut être possible de programmer le circuit de commande en fonction des éléments utilisés avec le chargeur, c'est-à-dire le générateur électrique, le module de stockage, ou encore les appareils à recharger. Cette programmation peut se faire sur ordre de l'utilisateur, par exemple par commande radio, ou par l'intermédiaire d'un câble de connexion, ou encore par remplacement de la mémoire contenant le programme.

Eventuellement, le circuit de commande identifie de quels types sont le générateur, le module de stockage ou les appareils à recharger pour adapter le fonctionnement à ces dispositifs. L'identification peut être automatique, par exemple si ces éléments comportent des étiquettes radio, ou des puces, collées sur ceux-ci pouvant communiquer par exemple par ondes radio ou par contact avec le circuit de commande.

Selon un autre mode de réalisation, le générateur électrique est un générateur thermodynamique, dans lequel la source chaude est l'air ambiant et la source froide est une réserve d'air liquide.

## Revendications

1. Chargeur électrique (1) comprenant :
un module de stockage d'énergie électrique (3) ayant une interface (31) adaptée pour un raccordement à une batterie externe (41, 42) à recharger,
un générateur (2) électrique alimenté en ressources énergétiques de manière commandable, pour fournir de l'énergie électrique au module de stockage (3), selon un point de fonctionnement choisi,
**caractérisé en ce qu'**il comprend en outre :
des moyens de commande (5) du générateur (2) agencés pour adapter le point de fonctionnement dudit générateur (2) lorsqu'il fournit de l'énergie électrique au module de stockage (3), en fonction d'informations (530) sur l'état du module de stockage (3) et d'informations (520) sur l'état du générateur,
lesdites informations (530) sur l'état du module de stockage comprenant la charge restante dans le module de stockage, la température du module de stockage ou la pression dans le module de stockage, et lesdites informations (520) sur l'état du générateur comprenant la température du générateur ou la quantité d'énergie encore disponible dans le générateur.

2. Chargeur (1) selon la revendication 1, dans lequel le générateur électrique est un générateur électrochimique.

3. Chargeur (1) selon la revendication 2, dans lequel les moyens de commande (5) du générateur (2) sont agencés pour contrôler une réaction chimique dans le générateur (2), en fonction d'informations (530) sur l'état du module de stockage.

4. Chargeur (1) selon la revendication 2 ou la revendication 3, dans lequel le générateur électrochimique (2) comprend une pile à combustible.

5. Chargeur (1) selon l'une quelconque des revendications précédentes, dans lequel l'interface de raccordement du module de stockage comprend un circuit d'adaptation (31) pour adapter des paramètres de sortie du module de stockage (3) à des paramètres de charge de la batterie (41, 42).

6. Chargeur (1) selon l'une des revendications précédentes, dans lequel les informations (530) sur l'état du module de stockage (3) comprennent sa charge, sa température, sa pression, sa tension ou son intensité, en entrée ou en sortie.

7. Chargeur selon l'une des revendications précédentes, dans lequel le module de stockage (3) comprend plusieurs éléments de stockage (30, 301, 302, 303) et des moyens de commutation (311, 312, 313, 314, 315) pour connecter les éléments de stockage (30, 301, 302, 303) en parallèle durant la charge et en série durant la décharge.

8. Chargeur (1) selon l'une des revendications précédentes, comprenant en outre des moyens pour charger le module de stockage (3) depuis une source externe d'énergie.

9. Chargeur (1) selon la revendication 8, dans lequel la source externe comprend un câble de raccordement au secteur ou un câble USB.

10. Chargeur (1) selon l'une quelconque des revendications précédentes, dans lequel au moins l'un parmi le générateur électrique (2), le module de stockage (3) et la batterie externe (41, 42) comporte un dispositif d'identification adapté pour communiquer des données au circuit de commande (5), ledit circuit de commande (5) étant configuré pour adapter sa commande sur la base desdites données.

## Patentansprüche

1. Elektrisches Ladegerät (1), das enthält:
ein Speichermodul elektrischer Energie (3), das eine Schnittstelle (31) hat, die für einen Anschluss an eine aufzuladende externe Batterie (41, 42) angepasst ist,
einen elektrischen Generator (2), der gemäß einem gewählten Betriebspunkt steuerbar mit Energieressourcen gespeist wird, um elektrische Energie an das Speichermodul (3) zu liefern,
**dadurch gekennzeichnet, dass** es außerdem enthält:
Steuereinrichtungen (5) des Generators (2), die eingerichtet sind, um den Betriebspunkt des Generators (2), wenn er elektrische Energie an das Speichermodul (3) liefert, abhängig von Informationen (530) über den Zustand des Speichermoduls (3) und von Informationen (520) über den Zustand des Generators anzupassen,
wobei die Informationen (530) über den Zustand des Speichermoduls die verbleibende Ladung in dem Speichermodul, die Temperatur des Speichermoduls oder die Druck in dem Speichermodul enthalten, und
wobei die Informationen (520) über den Zustand des Generators die Temperatur des Generators oder die verfügbare Energiemenge in dem Generator enthalten.

2. Ladegerät (1) nach Anspruch 1, wobei der elektrische Generator ein elektrochemischer Generator ist.

3. Ladegerät (1) nach Anspruch 2, wobei die Steuereinrichtungen (5) des Generators (2) eingerichtet sind, um eine chemische Reaktion im Generator (2) abhängig von Informationen (530) über den Zustand des Speichermoduls zu kontrollieren.

4. Ladegerät (1) nach Anspruch 2 oder Anspruch 3, wobei der elektrochemische Generator (2) eine Brennstoffzelle enthält.

5. Ladegerät (1) nach einem der vorhergehenden Ansprüche, wobei die Anschlussschnittstelle des Speichermoduls einen Anpassungskreis (31) enthält, um Ausgangsparameter des Speichermoduls (3) an Ladeparameter der Batterie (41, 42) anzupassen.

6. Ladegerät (1) nach einem der vorhergehenden Ansprüche, wobei die Informationen (530) über den Zustand des Speichermoduls (3) seine Ladung, seine Temperatur, seinen Druck, seine Spannung oder seine Stärke am Eingang oder am Ausgang enthalten.

7. Ladegerät nach einem der vorhergehenden Ansprüche, wobei das Speichermodul (3) mehrere Speicherelemente (30, 301, 302, 303) und Schaltelemente (311, 312, 313, 314, 315) enthält, um die Speicherelemente (30, 301,302, 303) während des Ladens parallel und während des Entladens in Reihe zu schalten.

8. Ladegerät (1) nach einem der vorhergehenden Ansprüche, das weiter Einrichtungen zum Laden des Speichermoduls (3) ausgehend von einer externen Energiequelle enthält.

9. Ladegerät (1) nach Anspruch 8, wobei die externe Quelle ein Netzanschlusskabel oder ein USB-Kabel enthält.

10. Ladegerät (1) nach einem der vorhergehenden Ansprüche, wobei mindestens einer von dem elektrischen Generator (2), dem Speichermodul (3) und der externen Batterie (41, 42) eine Identifikationsvorrichtung aufweist, die geeignet ist, um Daten an den Steuerschaltkreis (5) zu übermitteln, wobei der Steuerschaltkreis (5) konfiguriert ist, um seine Steuerung anhand der Daten anzupassen.

## Claims

1. Electric charger (1) comprising:
an electrical energy storage module (3) having an interface (31) adapted for connection to an external battery (41, 42) to be recharged,
an electrical generator (2) supplied with energy in a controllable manner in order to supply electrical energy to the storage module (3), according to a chosen operating point,
**characterized in that** it further comprises:
control means (5) of the generator (2) designed to adapt the operating point of said generator (2) when it supplies electrical energy to the storage module (3), according to information (530) relating to the state of the storage module (3) and information (520) relating to the state of the generator, said information (530) relating to the state of the storage module comprising the remaining charge in the storage module, the temperature of the storage module or the pressure in the storage module, and said information (520) relating to the state of the generator comprising the temperature of the generator or the amount of energy still available in the generator.

2. Charger (1) according to Claim 1, in which the electrical generator is an electrochemical generator.

3. Charger (1) according to Claim 2, in which the control means (5) of the generator (2) are designed to control a chemical reaction in the generator (2) according to information (530) relating to the state of the storage module.

4. Charger (1) according to Claim 2 or Claim 3, in which the electrochemical generator (2) comprises a fuel cell.

5. Charger (1) according to any one of the preceding claims, in which the connection interface of the storage module comprises a matching circuit (31) to adapt output parameters of the storage module (3) to charging parameters of the battery (41, 42).

6. Charger (1) according to one of the preceding claims, in which the information (530) relating to the state of the storage module (3) comprises its charge, its temperature, its pressure, its voltage or its intensity, at the input or output.

7. Charger according to one of the preceding claims, in which the storage module (3) comprises a plurality of storage elements (30, 301, 302, 303) and switching means (311, 312, 313, 314, 315) to connect the storage elements (30, 301, 302, 303) in parallel during charging and in series during discharging.

8. Charger (1) according to one of the preceding claims, furthermore comprising means to charge the storage module (3) from an external energy source.

9. Charger (1) according to Claim 8, in which the external source comprises a mains connection cable or a USB cable.

10. Charger (1) according to any one of the preceding claims, in which at least one from the electrical generator (2), the storage module (3) and the external battery (41, 42) comprises an identification device adapted to supply data to the control circuit (5), said control circuit (5) being configured to adapt its control on the basis of said data.
